# EUROPEAN PATENT APPLICATION

(11) **EP 4 845 003 A1**
(43) Date of publication of application: **25.11.2026**
(21) Application number: 26178766.7
(22) Date of filing: 14.05.2026
(51) Int. Cl.: H02K 49/10, H02K 7/06

(54) **A ROTOR FOR A MAGNETIC LEAD SCREW AND A MAGNETIC LEAD SCREW COMPRISING SAID ROTOR**

(30) Priority: 19.05.2025 IT 202500011269
(71) Applicant: GEA Mechanical Equipment Italia S.p.A., 43123 Parma (IT)
(72) Inventor: ACQUAVIVA, Alessandro, 10131 TORINO (IT); ACQUAVIVA, Sebastiano, 10020 ARIGNANO (TORINO) (IT); TONELLI, Annachiara, 43044 COLLECCHIO (PARMA) (IT); MAGGI, Leonardo, 43126 PARMA (IT)
(74) Representative: Dondi, Silvia

(57) **Abstract**

A rotor (1) for a magnetic lead screw (10), the rotor (1) comprising:
- a first hollow cylinder (2);
- a plurality of arched magnetic tiles (3) arranged side by side to create a second hollow cylinder (4) which is applied on the first hollow cylinder (2), each arched magnetic tile (3) comprising a plurality of arched poles (5) distributed at a constant pole pitch (p) and with alternating polarity in an axial direction (A-A) which is parallel to an axis of symmetry of the first hollow cylinder (2) and of the second hollow cylinder (4).

## Description

The present invention relates to a rotor for a magnetic lead screw and a magnetic lead screw comprising said rotor.

In particular, the present invention has a great potential in low-speed applications.

The invention finds application in several sectors, such as automotive, industrial automation, ventilation, pumping, lifting machines, earthmoving, heavy agriculture, gardening, naval sector machines.

A possible non-limiting application is in high pressure industrial pistons.

In particular, the invention may well be used in the food industry, in particular in the dairy sector, or in the chemical, pharmaceutical or cosmetic industry.

The invention can be used in manufacturing areas where homogenization is a step of the production process.

Consider, for example, the production of carbon-based nanostructured materials, such as graphene and carbon nanotubes or cellular breakdown of yeasts, algae, or microorganisms for the production of intracellular material.

Magnetic lead screws are well known for converting torque and angular motion into linear motion, and vice versa, without mechanical contact.

In fact, magnetic lead screws transmit driving forces from a screw (rotor) to a nut (mover) through magnetic coupling. Thus, magnetic screws result in the reduction of frictional losses, as magnetic interactions inherently eliminate direct contact between components, leading to enhanced energy efficiency and reduced wear.

In addition, magnetic screws offer smoother operation with less noise and vibration, increasing system longevity and reducing maintenance requirements.

Even more, the absence of physical contact makes these solutions suitable for operating in harsh environments where dust, moisture, or corrosive elements may impair traditional mechanical systems. Furthermore, magnetic screws enable more precise motion control due to the fine tuning of magnetic fields, enhancing accuracy in applications which require high-precision linear movement.

Document US 5,687,614 discloses a magnetic screw device comprising a screw shaft made of magnetic material and having thread ridges formed on the outer peripheral surface thereof, and a nut body fitted on the screw shaft with a clearance defined therebetween. The nut body comprises a magnetic sleeve having a smoothly finished inner peripheral surface and substantially concentric with the screw shaft, and guide rings disposed at the opposite ends of the magnetic sleeve as viewed in the thrust direction, and a housing for holding the magnetic sleeve and guide rings. The magnetic sleeve is helically magnetized on its inner peripheral surface with magnetic poles opposed to the thread ridges of the screw shaft, so that when the screw shaft is rotated, the nut body is linearly moved by the magnetic action.

Document JP2016025700 discloses a magnetic screw actuator in which the magnetic nut and a mechanism for rotationally driving the magnetic nut are integrated with each other. This configuration eliminates a driving motor rotor, and components for a block part to connect the driving motor rotor and a magnetic pole on the magnetic nut side, which have conventionally been necessary for rotationally driving the magnetic nut. Arc magnets, also called magnetic tiles, are kind of permanent magnets in tile shape, mainly used to manufacture magnetic screws.

On the market are available neodymium arc magnets, which are mostly magnetized through diameter.

Nevertheless, single pole arc magnets with inclined shape are critical in terms of manufacturing time and costs since they need additional manufacturing steps and pose precision issues to each mounting.

In addition, the magnetization process is critical, as well as handling premagnetized tiles.

Among scientific literature, reference is made to the following exemplary documents:
- Zhao A, Wu W, Jiang J, Zhu L, Lu K, et.al. "Design and experiment of a magnetic lead screw for the point-absorbing wave energy conversion system", IET Electric Power Applications 14(11): 2146-2153, September 2020;
- F Gao, Q Wang, J Zou, "Analytical Modeling of 3-D Magnetic Field and Performance in Magnetic Lead Screws Accounting for Magnetization Pattern", IEEE Transactions on Industrial Electronics 67(6): 4785-4796, 31 July 2019;
- M. B. Kouhshahi and J. Z. Bird, "A magnetically geared lead screw," no. 1, pp.1-8, 2015.

In this context, the object of the present invention is to provide a rotor for a magnetic lead screw and a magnetic lead screw comprising said rotor, which overcome the outstanding problems of the prior art cited above.

In particular, the object of the present invention is to propose a rotor for a magnetic lead screw, which allows a more precise control and manipulation of the magnetic field.

Another object of the present invention is to propose a rotor for a magnetic lead screw, which increases torque/force transmission and efficiency over the prior art solutions.

Another object of the present invention is to propose a rotor for a magnetic lead screw, which may be easily adapted on the basis of specific torque/force and speed requirements.

Another object of the present invention is to propose a rotor for a magnetic lead screw, which is easier to manufacture and assemble than multiple single tiles or ring shapes.

Another object of the present invention is to propose a rotor for a magnetic lead screw and a magnetic lead screw comprising said rotor, which may be used in harsh operating conditions, including temperature variations, mechanical stress, and corrosion, ensuring long-term reliability and reduced maintenance.

The stated technical task and specified aims are substantially achieved by a rotor for a magnetic lead screw, the rotor comprising:
- a first hollow cylinder;
- a plurality of arched magnetic tiles arranged side by side to create a second hollow cylinder which is applied on the first hollow cylinder, characterized in that each arched magnetic tile of the plurality of arched magnetic tiles comprises a plurality of arched poles distributed at a constant pole pitch and with alternating polarity in an axial direction which is parallel to an axis of symmetry of the first hollow cylinder and of the second hollow cylinder.

In particular, for each arched magnetic tile the arched poles are distributed with alternating polarity along a length of the second hollow cylinder. Preferably, all the arched magnetic tiles of the plurality of arched magnetic tiles are identical in dimensions and material composition.

According to one embodiment of the invention, each arched magnetic tile of the plurality of arched magnetic tiles has a core made of a permanent magnetic material and a coating made of sintered or plastic material. The coating is applied on the core.

According to one example, the core of each arched magnetic tile is made of one of the following materials: NdFeB, SmCo, Ferrite.

According to one embodiment of the invention, each arched magnetic tile of the plurality of arched magnetic tiles has a length which is an integer fraction of an inner circumference of the second hollow cylinder. In this context, the length is measured in the axial direction.

According to one aspect of the invention, the rotor further comprises magnetization means configured to generate a magnetic field having a predefined inclination angle with respect to the axial direction such that a multiple of the pole pitch is completed on an inner circumference of the second hollow cylinder.

The stated technical task and specified aims are substantially achieved by a magnetic lead screw comprising at least:
- a rotor according to the present invention; and
- a nut which is magnetically coupled to the rotor.

Further characteristics and advantages of the present invention will more fully emerge from the non-limiting description of a preferred but not exclusive embodiment of a rotor for a magnetic lead screw and a magnetic lead screw comprising said rotor, as illustrated in the accompanying drawings in which:
- figure 1 illustrates a perspective view of a rotor for a magnetic lead screw, with an arched magnetic tile being moved away, according to the present invention;
- figure 2 illustrates a perspective view of an arched magnetic tile of the rotor according to figure 1;
- figures 3 and 4 illustrate another embodiment of arched magnetic tile of a rotor for a magnetic lead screw, according to the present invention, in two different perspective views;
- figure 5 illustrates a perspective view of a magnetic screw, according to the present invention.

With reference to the figures, number 1 indicates a rotor 1 for a magnetic lead screw 10.

The rotor 1 comprises a first hollow cylinder 2. Preferably, the first hollow cylinder 2 is made of stainless steel.

The rotor 1 further comprises a plurality of arched magnetic tiles 3 arranged to cover an external later surface 2a of the first hollow cylinder 2. The arched magnetic tiles 3 are arranged side by side to create a second hollow cylinder 4 which is applied on the first hollow cylinder 2.

In particular, the arched magnetic tiles 3 are arranged side by side without any gaps.

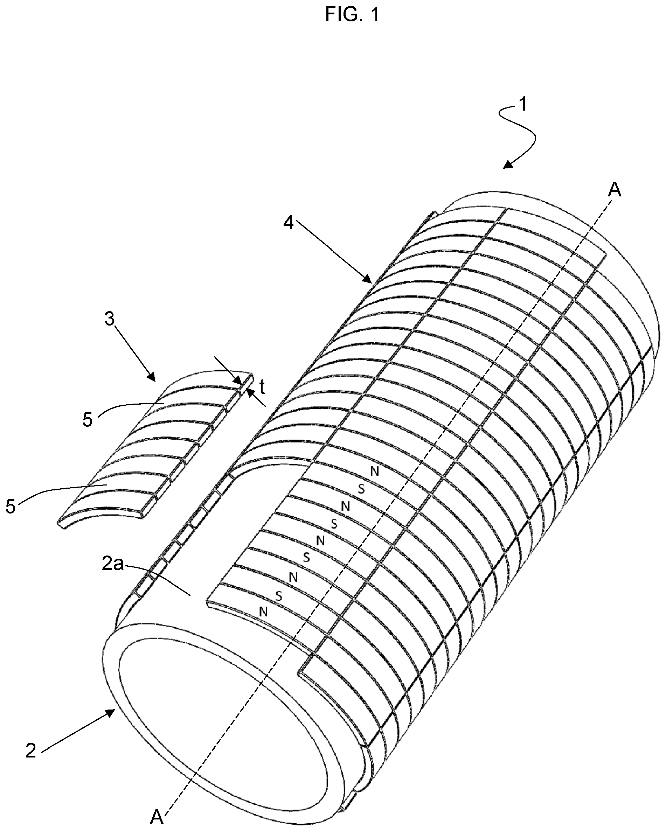

This is illustrated for example in figure 1.

The second hollow cylinder 4 is coaxial to the first hollow cylinder 2.

The second hollow cylinder 4 is also referred to as "magnetic cylinder".

The magnetic cylinder 4 has an outer radius Ro, an inner radius Ri and a thickness t which is the difference between the outer radius Ro and the inner radius Ro.

Preferably, all the arched magnetic tiles 3 are identical, which means they have the same dimensions and are made of the same material.

Thus, the thickness t of the magnetic cylinder 4 coincides with the thickness of each arched magnetic tile 3. This is shown in figure 1. Advantageously, each arched magnetic tile 3 comprises a plurality of arched poles 5 distributed at a constant pole pitch p.

In this context, the pole pitch p is also referred to as the pole width.

In each arched magnetic tile 3, the arched poles 5 are distributed with alternating polarity in an axial direction A-A which is parallel to an axis of symmetry of the first and second hollow cylinders 2, 4.

In other words, the arched poles 5 of the same arched magnetic tile 3 are distributed with alternating polarity along the length of the magnetic cylinder 4.

Advantageously, the number of arched poles 5 of an arched magnetic tile 3 can be set depending on the application of the rotor 1.

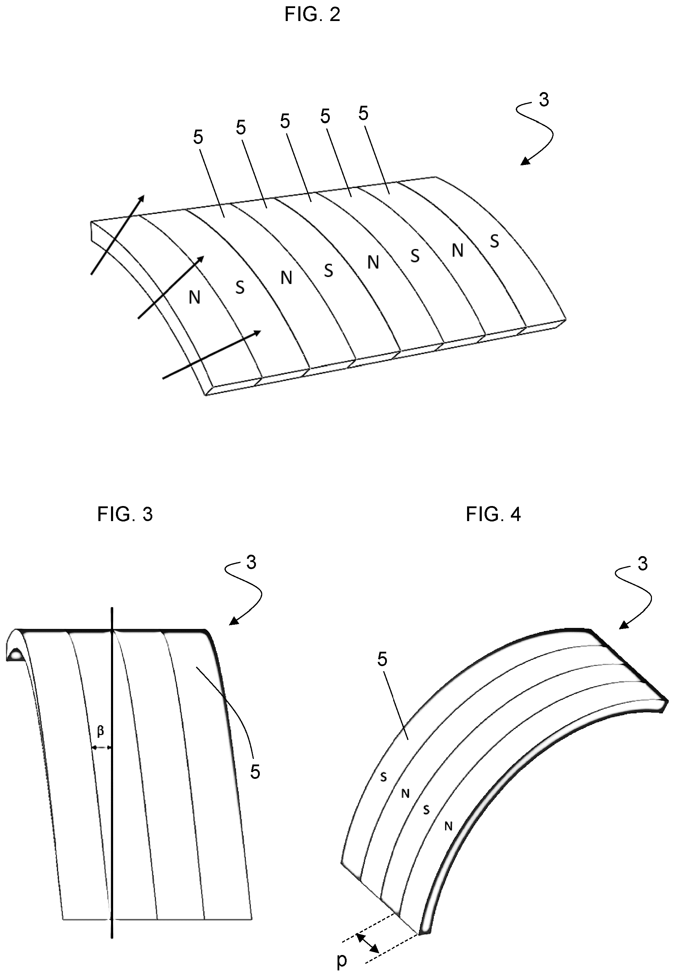

For example, figure 2 illustrates an arched magnetic tile 3 having eight arched poles 5, whereas figures 3-4 illustrate an arched magnetic tile 3 having four arched poles 5.

Preferably, each arched magnetic tile 3 has a length measured in the axial direction A-A, wherein the length is an integer fraction of the inner circumference of the magnetic cylinder 4. The inner circumference of the magnetic cylinder 4 is the circumference having the inner radius Ri.

Each arched magnetic tile 3 has a core made of a permanent magnetic material and a coating applied on the core and made of sintered or plastic material.

For example, the permanent magnetic material used for the core can be one of the following: NdFeB, SmCo, Ferrite.

Alternatively, any other hard magnetic material that allows permanent magnetization can be used for the core.

The rotor 1 further comprises magnetization means (not shown) configured to generate a magnetic field having a predefined inclination angle β with respect to the axial direction A-A such that a multiple of the pole pitch p is completed on the inner circumference of the magnetic cylinder 4, creating a screw with a single or multiple pitch per revolution. For example, magnetization means comprise a magnetizer head that is shaped accordingly.

Each arched magnetic tile 3 can be either inclined by the same angle as the predefined inclination angle β as of magnetization, or with no inclination to fit the whole circumference and save magnetic material.

In addition, any arbitrary inclination can be chosen for each arched magnetic tile 3.

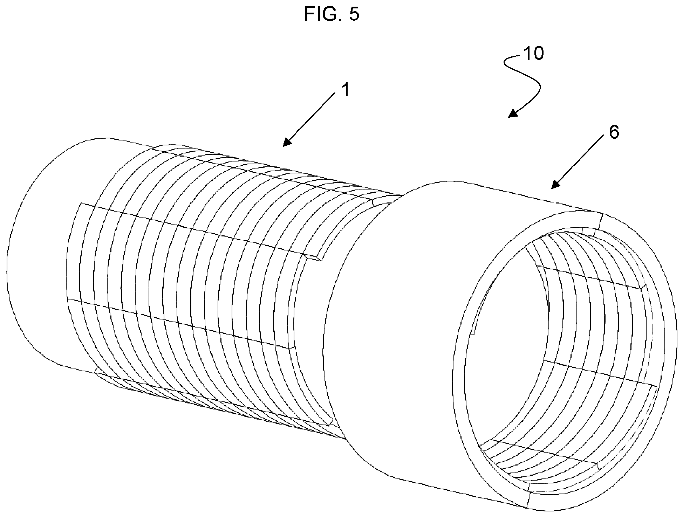

Figure 5 illustrates a magnetic screw 10 comprising the proposed rotor 1 and a nut 6 which is magnetically coupled to the rotor 1.

The characteristics of the rotor for a magnetic lead screw proposed herewith emerge clearly from the above description, as do the advantages. Since each arched magnetic tile comprises multiple poles, it allows for a more precise control and manipulation of the magnetic field.

The multipolar configuration offers an improved torque/force transmission and efficiency.

The arched magnetic tiles proposed in the current invention may be customized to accommodate various gear ratios and application requirements. By adjusting the number and arrangement of the poles for each arched magnetic tile, the magnetic tile may be adapted to meet specific torque/force and speed requirements.

Furthermore, the arched magnetic tiles are easier to manufacture and assemble compared to multiple single tiles or ring-shaped tiles, thus resulting a simpler arrangement for the rotor.

Finally, each magnetic tile has enhanced durability, since it is constructed to withstand harsh operating conditions, including temperature variations, mechanical stress, and corrosion.

## Claims

1. A rotor (1) for a magnetic lead screw (10), said rotor (1) comprising:
- a first hollow cylinder (2);
- a plurality of arched magnetic tiles (3) arranged side by side to create a second hollow cylinder (4), said second hollow cylinder (4) being applied on the first hollow cylinder (2),
**characterized in that** each arched magnetic tile (3) of the plurality of arched magnetic tiles (3) comprises a plurality of arched poles (5) distributed at a constant pole pitch (p) and with alternating polarity in an axial direction (A-A) which is parallel to an axis of symmetry of the first hollow cylinder (2) and of the second hollow cylinder (4).

2. The rotor (1) according to claim 1, wherein for each arched magnetic tile (3) the arched poles (5) are distributed with alternating polarity along a length of the second hollow cylinder (4).

3. The rotor (1) according to claim 1 or 2, wherein all the arched magnetic tiles (3) of the plurality of arched magnetic tiles (3) are identical in dimensions and material composition.

4. The rotor (1) according to any one of the preceding claims, wherein each arched magnetic tile (3) of the plurality of arched magnetic tiles (3) has a core made of a permanent magnetic material and a coating made of sintered or plastic material, said coating being applied on the core.

5. The rotor (1) according to claim 4, wherein the core of each arched magnetic tile (3) is made of one of the following materials: NdFeB, SmCo, Ferrite.

6. The rotor (1) according to any one of the preceding claims, wherein each arched magnetic tile (3) of the plurality of arched magnetic tiles (3) has a length measured in the axial direction (A-A), said length being an integer fraction of an inner circumference of the second hollow cylinder (4).

7. The rotor (1) according to any one of the preceding claims, further comprising magnetization means configured to generate a magnetic field having a predefined inclination angle (β) with respect to the axial direction (A-A) such that a multiple of the pole pitch (p) is completed on an inner circumference of the second hollow cylinder (4).

8. A magnetic lead screw (10) comprising at least:
- a rotor (1) according to any one of the preceding claims; and
- a nut (6) which is magnetically coupled to said rotor (1).
